# EUROPEAN PATENT SPECIFICATION

(11) **EP 3 649 022 B1**
(45) Date of publication and mention of the grant of the patent: **11.08.2021**
(21) Application number: 17749748.4
(22) Date of filing: 03.07.2017
(51) Int. Cl.: B60S 1/34

(54) **WIPER ARM ASSEMBLY FOR A VEHICLE WINDSCREEN WIPER SYSTEM**
WISCHARM FÜR EINE SCHEIBENWISCHERANLAGE EINES FAHRZEUGS
ENSEMBLE BRAS D'ESSUIE-GLACE POUR SYSTÈME D'ESSUIE-GLACE DE PARE-BRISE DE VÉHICULE

(43) Date of publication of application: 13.05.2020
(73) Proprietor: Volvo Truck Corporation, 405 08 Göteborg (SE)
(72) Inventor: BERNE, Nicolas, 38540 Heyrieux (FR)
(74) Representative: Verriest, Philippe
(86) International application number: PCT/IB2017/000912
(87) International publication number: WO 2019/008406

(56) References cited:
- CN-A- 102 837 674
- DE-A1-102012 206 957
- JP-U- S5 960 055
- US-A- 3 366 989
- US-A- 5 430 907

## Description

### TECHNICAL FIELD

The invention relates to a wiper arm assembly for a vehicle windscreen wiper system, and to a windscreen wiper system including said wiper arm assembly.

The invention can be applied in vehicles, in particular heavy-duty vehicles such as trucks, buses and construction equipment. Although the invention will be described with respect to a lorry or truck, the invention is not restricted to these particular types of vehicle, but may also be used in other vehicles such as, for example, cars and vans.

### BACKGROUND

US5426815 discloses a windscreen wiper system including a wiper arm assembly having:
- a wiper arm configured to support a wiper blade,
- a mounting member configured to be secured to a wiper shaft, the wiper arm being pivotally connected to the mounting portion,
- a spring member including a first spring end portion operatively connected to the wiper arm and a second spring end portion operatively connected to the mounting member, the spring member being configured to apply a biasing force to the wiper arm such that, in use, a wiper blade supported by the wiper arm is urged against a vehicle windscreen,
- a force adjusting device configured to adjust the biasing force applied by the spring member to the wiper arm based on the position of the wiper arm.

The force adjusting device of US5426815 is particularly configured to reduce the biasing force applied by the spring member to the wiper arm when the wiper arm is located at its extreme positions and to increase the biasing force applied by the spring member to the wiper arm when the wiper arm is located at its intermediate positions located between its extreme positions.

Such a configuration of the force adjusting device notably allows overcoming a lifting of the wiper blade from the windscreen surface at high vehicle speeds, while avoiding a sticking of the wiper blade against the windscreen surface, and thus a shattering of the wiper blade, at low vehicle speeds.

However, when a windscreen wiper system as disclosed in US5426815 and provided with a conventional wiper blade is mounted on a vehicle having an aerodynamic windscreen, it is not possible to replace the conventional wiper blade with a flat wiper blade without modifying the wiper arm or the spring member. Indeed a flat wiper blade requires higher biasing force to maintain an optimal contact between the windscreen surface and the wiper blade when the windscreen is an aerodynamic windscreen.

But any replacement of the wiper arm or of the spring member induces extra cost for the final customer and results in more references to handle for the manufacturer.

JP S59 60055 U discloses a wiper arm assembly according to the preamble of claim 1.

### SUMMARY

An object of the invention is to provide an improved wiper arm assembly which allows simplified and cheaper replacement of a conventional wiper blade with a flat wiper blade, notably without requiring a replacement of any part of the wiper arm assembly, and notably of the wiper arm or of the spring member of the latter.

According to a first aspect, the invention provides a wiper arm assembly for a vehicle windscreen wiper system, the wiper arm assembly including:
- a wiper arm configured to support a wiper blade,
- a mounting member configured to be secured to a wiper shaft, the wiper arm being pivotally connected to the mounting portion,
- a spring member including a first spring end portion operatively connected to the wiper arm and a second spring end portion operatively connected to the mounting member, the spring member being configured to apply a biasing force to the wiper arm such that, in use, a wiper blade supported by the wiper arm is urged against a vehicle windscreen,
- a force adjusting device configured to adjust the biasing force applied by the spring member to the wiper arm,
wherein the force adjusting device includes an actuating member to which is connected the first spring end portion of the spring member, the actuating member being movably mounted on the wiper arm between a first adjusting position and a second adjusting position, and being configured to displace the first spring end portion between a first spring position in which the spring member applies a first biasing force to the wiper arm and a second spring position in which the spring member applies a second biasing force to the wiper arm which is higher than the first biasing force, when the actuating member is displaced between the first and second adjusting positions, the at least one guiding slot including a first abutting surface on which the actuating member abuts when the actuating member is in the first adjusting position, and a second abutting surface on which the actuating member abuts when the actuating member is in the second adjusting position, and the at least one guiding slot including an elongated guiding portion defining the first abutting surface, and a retaining portion defining the second abutting surface.

Due to such a configuration of the force adjusting device, when a user wishes to replace a conventional wiper blade supported by the wiper arm with a flat wiper blade, he only has to unmount the conventional wiper blade from the second end portion of the wiper arm, to mount the flat wiper blade on the second end portion of the wiper arm, and then to displace the actuating member from the first adjusting position to the second adjusting position in order to displace the first spring end portion of the spring member from the first spring position to the second spring position.

By such a displacement of the first spring end portion, the biasing force applied by the spring member to the wiper arm is higher and ensures an optimal contact between the windscreen surface and the flat wiper blade, even if the windscreen is an aerodynamic windscreen, and thus an optimal cleaning of the windscreen.

Therefore the wiper arm assembly according to the present invention ensures an easy replacement of a traditional wiper blade with a flat wiper blade without requiring the replacement of the wiper arm assembly, and notably of the wiper arm or the spring member.

The wiper arm assembly may also include one or more of the following features, taken alone or in combination.

According to an embodiment of the invention, the first spring end portion of the spring member is attached to the actuating member.

According to an embodiment of the invention, the second spring position is farther from the mounting portion than the first spring position.

According to an embodiment of the invention, the wiper arm includes a lower portion configured to be oriented towards the vehicle windscreen, the second spring position being closer to the lower portion of the wiper arm than the first spring position. Such a configuration of the force adjusting device further increases the value of the second biasing force.

According to an embodiment of the invention, the actuating member is slidably mounted on the wiper arm. Such a configuration of the actuating member eases its displacements for a user.

According to an embodiment of the invention, the wiper arm includes a first side wall provided with a first guiding slot, and a second side wall opposite to the first side wall and provided with a second guiding slot facing the first guiding slot, the first and second guiding slots being configured to guide the actuating member during displacements of the actuating member between the first and second adjusting positions.

According to an embodiment of the invention, the first and second abutting surfaces are offset with respect to each other in a longitudinal direction of the wiper arm.

According to an embodiment of the invention, the retaining portion is configured to hold the actuating member back in the second adjusting position, and particularly as long as the actuating member is not voluntary moved to the first adjusting position. Such a configuration of the at least one guiding slot avoids any undesired displacement of the actuating member towards the first adjusting position.

According to an embodiment of the invention, the actuating member includes an attachment portion on which is attached the first spring end portion, the attachment portion being engaged in the at least one guiding member.

According to an embodiment of the invention, the attachment portion extends transversally with respect to the longitudinal direction of the wiper arm.

According to an embodiment of the invention, the attachment portion has a cylindrical shape.

According to an embodiment of the invention, the actuating member includes at least one handling portion located outside the wiper arm and configured to be handled by a user. Such a configuration of the actuating member eases its handling by a user.

According to an embodiment of the invention, the at least one handling portion is connected to the attachment portion.

According to an embodiment of the invention, the actuating member includes a first handling portion which is movable along the first side wall of the wiper arm, and a second handling portion which is movable along the second side wall of the wiper arm.

According to an embodiment of the invention, the first and second handling portions are respectively connected to first and second ends of the attachment portion.

According to an embodiment of the invention, the first spring end portion is proximal to the wiper shaft and the second spring end portion is distal to the wiper shaft.

According to an embodiment of the invention, the spring member is located within the wiper arm.

According to an embodiment of the invention, each of the first and second adjusting position is stable.

According to an embodiment of the invention, the first spring end portion is pivotally coupled to the actuating member, and particularly to the attachment portion of the actuating member.

According to a second aspect, the invention provides a windscreen wiper system for a vehicle, including a wiper arm assembly according to the invention, and a wiper blade secured to the wiper arm of the wiper arm assembly.

According to an embodiment of the invention, the windscreen wiper system further includes a driving system including a wiper shaft and a driving device configured to rotatably drive the wiper shaft reciprocally in two opposite directions so as to rotatably reciprocally drive the wiper arm between two opposite extreme positions.

According to a third aspect, the invention provides a vehicle including a windscreen and a windscreen wiper system according to the invention.

### BRIEF DESCRIPTION OF THE DRAWINGS

With reference to the appended drawings, below follows a more detailed description of embodiments of the invention cited as examples.

In the drawings:
Fig.1 is a partial schematic perspective view of a truck provided with a windscreen wiper system according to the invention.
Fig. 2 is partial section view of the windscreen wiper system of Figure 1.
Fig. 3 and 4 are partial section views of the windscreen wiper system of Figure 1 showing a first spring end portion of a spring member of the windscreen wiper system respectively in a first spring position and a second spring position.
Fig. 5 and 6 are bottom views of the windscreen wiper system of Figure 1 showing the first spring end portion of the spring member respectively in the first and second spring positions.

### DETAILED DESCRIPTION OF EXAMPLE EMBODIMENTS OF THE INVENTION

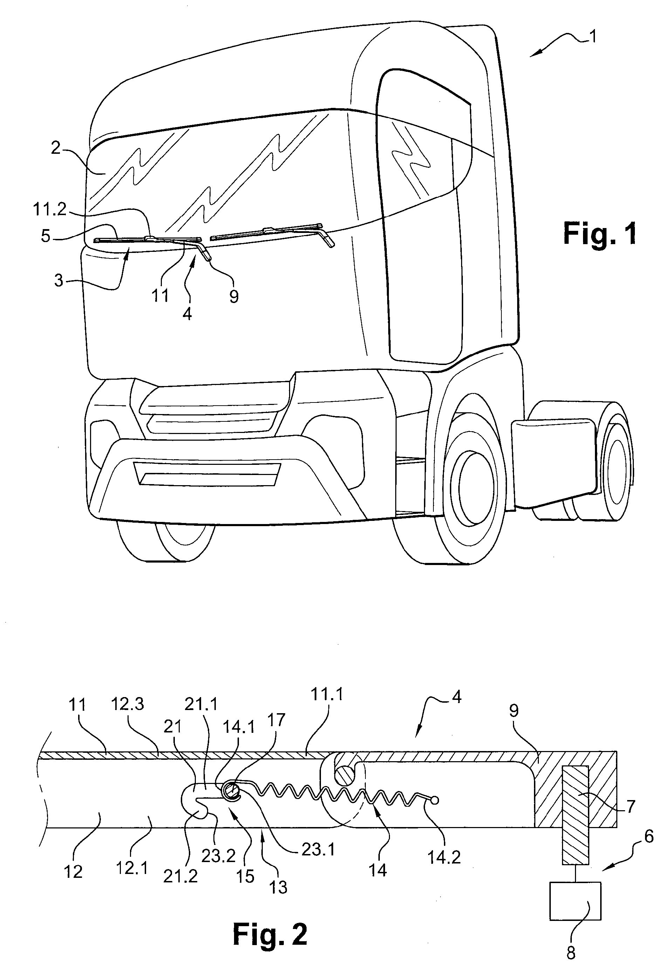

Figure 1 illustrates schematically a truck 1 including a passenger cabin having a windscreen 2 and a windscreen wiper system 3 for cleaning the windscreen 2.

The windscreen wiper system 3 includes a wiper arm assembly 4 and a wiper blade 5 secured to the wiper arm assembly 4. As better shown on Figure 2, the windscreen wiper system 3 further includes a driving system 6 including a wiper shaft 7 secured to the wiper arm assembly 4 and a driving device 8 configured to rotatably drive the wiper shaft 7 reciprocally in two opposite directions so as to rotatably reciprocally drive the wiper arm assembly 4 between two opposite extreme positions.

The wiper arm assembly 4 particularly includes a mounting member 9 secured to the wiper shaft 7, and a wiper arm 11 having a first end portion 11.1 pivotally connected to the mounting member 9 and a second end portion 11.2 supporting the wiper blade 5.

According to the embodiment shown on the figures, the wiper arm 11 includes a main portion 12 having an inverted U-shaped cross section. Thus the main portion 12 of the wiper arm 11 includes a first side wall 12.1, a second side wall 12.2 opposite to the first side wall 12.1, and an upper wall 12.3 connecting the first and second side walls 12.1, 12.2.

The wiper arm 11 further includes a lower portion 13 configured to be oriented towards the windscreen 2. According to the embodiment shown on the figures, the lower portion 13 is formed by the lower edges of the first and second side walls 12.1, 12.2.

The wiper arm assembly 4 further includes a spring member 14 located within the wiper arm 11, and particularly within an inner volume defined by the first and second side walls 12.1, 12.2 and the upper wall 12.3. The spring member 14 includes a first spring end portion 14.1 distal to the wiper shaft 7 and operatively connected to the wiper arm 11, and a second spring end portion 14.2 proximal to the wiper shaft 7 and operatively connected to the mounting member 9. The spring member 14 is particularly configured to apply a biasing force to the wiper arm 11 such that, in use, the wiper blade 5 supported by the wiper arm 11 is urged against the windscreen 2.

The wiper arm assembly 4 also includes a force adjusting device 15 configured to adjust the biasing force applied by the spring member 14 to the wiper arm 11.

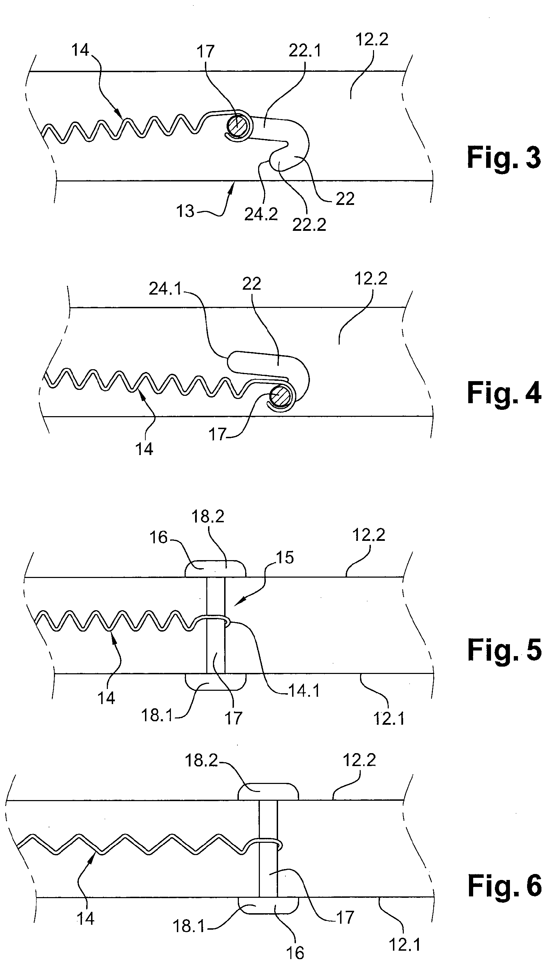

The force adjusting device 15 includes an actuating member 16 (better shown on Figures 5 and 6) movably mounted, and advantageously slidably mounted, on the wiper arm 11 between a first adjusting position (see Figures 2, 3 and 5) proximal to the wiper shaft 7 and a second adjusting position (see Figures 4 and 6) distal to the wiper shaft 7.

The actuating member 16 includes an attachment portion 17 on which is attached, and for example pivotally attached, the first spring end portion 14.1. According to the embodiment shown on the figures, the attachment portion 17 extends transversally with respect to a longitudinal direction of the wiper arm 11, and has a cylindrical shape.

The actuating member 16 is particularly configured to displace the first spring end portion 14.1 from a first spring position (see Figures 2, 3 and 5) in which the spring member 14 applies a first biasing force to the wiper arm 11 to a second spring position (see Figures 4 and 6) in which the spring member 14 applies a second biasing force to the wiper arm 11, when the actuating member 16 is displaced from the first adjusting position to the second adjusting position. Further the actuating member 16 is configured to displace the first spring end portion 14.1 from the second spring position to the first spring position, when the actuating member 16 is displaced from the second adjusting position to the first adjusting position.

As better shown on Figures 2 to 6, the second spring position is farther from the mounting portion 9 than the first spring position. Thus, the second biasing force applied by the spring member 14 to the wiper arm 11 is higher than the first biasing force applied by the spring member 14 to the wiper arm 11. According to the embodiment shown on the figures, the second spring position is also closer to the lower portion 13 of the wiper arm 11 than the first spring position.

The actuating member 16 further includes a first handling portion 18.1 and a second handling portion 18.2 which are located outside the wiper arm 11 and which are configured to be handled by a user. The first and second handling portions 18.1, 18.2 are respectively connected to first and second ends of the attachment portion 17. Particularly, the first handling portion 18.1 is movable along the first side wall 12.1 of the wiper arm 11, and the second handling portion 18.2 is movable along the second side wall 12.2 of the wiper arm 11.

The force adjusting device 15 further includes a first guiding slot 21 provided on the first side wall 12.1 of the wiper arm 11, and a second guiding slot 22 provided on the second side wall 12.2 of the wiper arm 11, the second guiding slot 22 facing the first guiding slot 21. The first and second guiding slots 21, 22 are configured to guide the actuating member 16, and particularly the attachment portion 17 of the actuating member 16, during displacements of the actuating member 16 between the first and second adjusting positions. Advantageously, the first and second ends of the attachment portion 17 are respectively engaged in the first and second guiding slots 21, 22, and an intermediate portion of the attachment portion 17, located between the first and second ends of the attachment portion 17, extends within the inner volume defined by the wiper arm 11.

The first guiding slot 21 includes an elongated guiding portion 21.1 defining a first abutting surface 23.1 on which the actuating member 16, and particularly the attachment portion 17, abuts when the actuating member 16 is in the first adjusting position, and a retaining portion 21.2 defining a second abutting surface 23.2 on which the actuating member 16 abuts when the actuating member 16 is in the second adjusting position. Further the second guiding slot 22 includes an elongated guiding portion 22.1 defining a first abutting surface 24.1 on which the actuating member 16, and particularly the attachment portion 17, abuts when the actuating member 16 is in the first adjusting position, and a retaining portion 22.2 defining a second abutting surface 24.2 on which the actuating member 16 abuts when the actuating member 16 is in the second adjusting position. Advantageously, the first and second abutting surfaces of each of the first and second guiding slots 21, 22 are offset with respect to each other in a longitudinal direction of the wiper arm 11.

According to the embodiment shown on the figures, the retaining portion 21.2, 22.2 of each of the first and second guiding slots 21, 22 is configured to hold the actuating member 16 back in the second adjusting position, and particularly as long as the actuating member 16 is not voluntary moved by a user to the first adjusting position.

A method for replacing a wiper blade 5 of a first type, such as a conventional wiper blade, with a wiper blade 5 of a second type, such as a flat wiper blade, will be disclosed hereafter. Such a method includes the following steps:
- unmounting a wiper blade 5 of a first type from the second end portion 11.2 of the wiper arm 11,
- mounting a wiper blade 5 of a second type on the second end portion 11.2 of the wiper arm 11,
- displacing the actuating member 16 from the first adjusting position to the second adjusting position in order to displace the first spring end portion 14.1 of the spring member 14 from the first spring position to the second spring position, such that the biasing force applied by the spring member 14 to the wiper arm 11 is higher and ensures an optimal contact between the windscreen 2 and the wiper blade of the second type, even if the windscreen 2 is an aerodynamic windscreen, and thus an optimal cleaning of the windscreen 2.

Therefore the windscreen wiper system 3 according to the present invention ensures an easy replacement of a traditional wiper blade with a flat wiper blade without requiring the replacement of the wiper arm assembly 4, and notably of the wiper arm 11.

It is to be understood that the present invention is not limited to the embodiment described above and illustrated in the drawings; rather, the skilled person will recognize that many changes and modifications may be made within the scope of the appended claims.

## Claims

1. A wiper arm assembly (4) for a vehicle windscreen wiper system (3), the wiper arm assembly (4) including:
- a wiper arm (11) configured to support a wiper blade (5),
- a mounting member (9) configured to be secured to a wiper shaft (7), the wiper arm (11) being pivotally connected to the mounting portion (9),
- a spring member (14) including a first spring end portion (14.1) operatively connected to the wiper arm (11) and a second spring end portion (14.2) operatively connected to the mounting member (9), the spring member (14) being configured to apply a biasing force to the wiper arm (11) such that, in use, a wiper blade (5) supported by the wiper arm (11) is urged against a vehicle windscreen (2),
- a force adjusting device (15) configured to adjust the biasing force applied by the spring member (14) to the wiper arm (11),
the force adjusting device (15) including an actuating member (16) to which is connected the first spring end portion (14.1) of the spring member (14), the actuating member (16) being movably mounted on the wiper arm (11) between a first adjusting position and a second adjusting position, and being configured to displace the first spring end portion (14.1) between a first spring position in which the spring member (14) applies a first biasing force to the wiper arm (11) and a second spring position in which the spring member (14) applies a second biasing force to the wiper arm (11) which is higher than the first biasing force, when the actuating member (16) is displaced between the first and second adjusting positions, the force adjusting device (15) further including at least one guiding slot (21, 22) provided on the wiper arm (11) and configured to guide the actuating member (16) during displacements of the actuating member (16) between the first and second adjusting positions, the at least one guiding slot (21, 22) including a first abutting surface (23.1, 24.1) on which the actuating member (16) abuts when the actuating member (16) is in the first adjusting position, and a second abutting surface (23.2, 24.2) on which the actuating member (16) abuts when the actuating member (16) is in the second adjusting position,
**characterized in that** the at least one guiding slot (21, 22) includes an elongated guiding portion (21.1, 22.1) defining the first abutting surface (23.1, 24.1), and a retaining portion (21.2, 22.2) defining the second abutting surface (23.2, 24.2).

2. The wiper arm assembly (4) according to claim 1, **characterized in that** the second spring position is farther from the mounting portion (9) than the first spring position.

3. The wiper arm assembly (4) according to claim 1 or 2, **characterized in that** the wiper arm (11) includes a lower portion (13) configured to be oriented towards the vehicle windscreen (2), the second spring position being closer to the lower portion (13) of the wiper arm (11) than the first spring position.

4. The wiper arm assembly (4) according to any one of claims 1 to 3, **characterized in that** the actuating member (16) is slidably mounted on the wiper arm (11).

5. The wiper arm assembly (4) according to any one of claims 1 to 4, **characterized in that** the actuating member (16) includes an attachment portion (17) on which is attached the first spring end portion (14.1), the attachment portion (17) being engaged in the at least one guiding slot (21, 22).

6. The wiper arm assembly (4) according to any one of claims 1 to 5, **characterized in that** the actuating member (16) includes at least one handling portion (18.1, 18.2) located outside the wiper arm (11) and configured to be handled by a user.

7. A windscreen wiper system (3) for a vehicle, including:
- a wiper arm assembly (4) according to any one of claims 1 to 6, and
- a wiper blade (5) secured to the wiper arm (11) of the wiper arm assembly (4).

8. The windscreen wiper system (3) according to claim 7, further including a driving system (6) including a wiper shaft (7) and a driving device (8) configured to rotatably drive the wiper shaft (7) reciprocally in two opposite directions so as to rotatably reciprocally drive the wiper arm (11) between two opposite extreme positions.

9. A vehicle (1) including (2) a windscreen (2) and a windscreen wiper system (3) according to claim 7 or 8.

## Patentansprüche

1. Wischarmbaugruppe (4) für eine Scheibenwischanlage (3) eines Fahrzeugs, wobei die Wischarmbaugruppe (4) beinhaltet:
- einen Wischarm (11), der konfiguriert ist, um ein Wischblatt (5) zu tragen,
- ein Montageglied (9), das konfiguriert ist, um an einer Wischwelle (7) befestigt zu werden, wobei der Wischarm (11) schwenkbar mit dem Montageabschnitt (9) verbunden ist,
- ein Federglied (14), das einen ersten Federendabschnitt (14.1) beinhaltet, der betrieblich mit dem Wischarm (11) verbunden ist, und einen zweiten Federendabschnitt (14.2), der betrieblich mit dem Montageglied (9) verbunden ist, wobei das Federglied (14) konfiguriert ist, um eine Vorspannkraft an den Wischarm (11) anzulegen, sodass ein Wischblatt (5), das von dem Wischarm (11) getragen wird, bei Verwendung gegen eine Windschutzscheibe (2) eines Fahrzeugs gedrängt wird,
- eine Kraftanpassungsvorrichtung (15), die konfiguriert ist, um die Vorspannkraft, die durch das Federglied (14) an den Wischarm (11) angelegt wird, anzupassen,
die Kraftanpassungsvorrichtung (15) ein Betätigungsglied (16) beinhaltet, mit dem der erste Federendabschnitt (14.1) des Federglieds (14) verbunden ist, wobei das Betätigungsglied (16) beweglich an dem Wischarm (11) zwischen einer ersten Anpassungsposition und einer zweiten Anpassungsposition angebracht ist, und konfiguriert ist, um den ersten Federendabschnitt (14.1) zwischen einer ersten Federposition, in der das Federglied (14) eine erste Vorspannkraft an den Wischarm (11) anlegt, und einer zweiten Federposition, in der das Federglied (14) eine zweite Vorspannkraft an den Wischarm (11) anlegt, die größer als die erste Vorspannkraft ist, zu verschieben, wenn das Betätigungsglied (16) zwischen der ersten und zweiten Anpassungsposition verschoben wird, wobei die Kraftanpassungsvorrichtung (15) weiter mindestens einen Führungsschlitz (21, 22) beinhaltet, der an dem Wischarm (11) bereitgestellt ist, und konfiguriert ist, um das Betätigungsglied (16) bei Verschiebungen des Betätigungsglieds (16) zwischen der ersten und zweiten Anpassungsposition zu führen, wobei der mindestens eine Führungsschlitz (21, 22) eine erste Anschlagoberfläche (23.1, 24.1) beinhaltet, an der das Betätigungsglied (16) anschlägt, wenn das Betätigungsglied (16) in der ersten Anpassungsposition ist, und eine zweite Anschlagoberfläche (23.2, 24.2), an der das Betätigungsglied (16) anschlägt, wenn das Betätigungsglied (16) in der zweiten Anpassungsposition ist,
**dadurch gekennzeichnet, dass** der mindestens eine Führungsschlitz (21, 22) einen länglichen Führungsabschnitt (21.1, 22.1) beinhaltet, der die erste Anschlagoberfläche (23.1, 24.1) definiert, und einen Rückhalteabschnitt (21.2, 22.2), der die zweite Anschlagoberfläche (23.2, 24.2) definiert.

2. Wischarmbaugruppe (4) nach Anspruch 1, **dadurch gekennzeichnet, dass** die zweite Federposition weiter von dem Montageabschnitt (9) entfernt ist, als die erste Federposition.

3. Wischarmbaugruppe (4) nach Anspruch 1 oder 2, **dadurch gekennzeichnet, dass** der Wischarm (11) einen unteren Abschnitt (13) beinhaltet, der konfiguriert ist, um zu der Windschutzscheibe (2) des Fahrzeugs gerichtet zu sein, wobei die zweite Federposition näher an dem unteren Abschnitt (13) des Wischarms (11) ist, als die erste Federposition.

4. Wischarmbaugruppe (4) nach einem der Ansprüche 1 bis 3, **dadurch gekennzeichnet, dass** das Betätigungsglied (16) gleitend an dem Wischarm (11) angebracht ist.

5. Wischarmbaugruppe (4) nach einem der Ansprüche 1 bis 4, **dadurch gekennzeichnet, dass** das Betätigungsglied (16) einen Befestigungsabschnitt (17) beinhaltet, an dem der erste Federendabschnitt (14.1) befestigt ist, wobei der Befestigungsabschnitt (17) in den mindestens einen Führungsschlitz (21, 22) eingeführt ist.

6. Wischarmbaugruppe (4) nach einem der Ansprüche 1 bis 5, **dadurch gekennzeichnet, dass** das Betätigungsglied (16) mindestens einen Handhabungsabschnitt (18.1, 18.2) beinhaltet, der außerhalb des Wischarmes (11) gelegen ist, und konfiguriert ist, um durch einen Nutzer gehandhabt zu werden.

7. Scheibenwischanlage (3) eines Fahrzeugs, Folgendes beinhaltend:
- eine Wischarmbaugruppe (4) nach einem der Ansprüche 1 bis 6, und
- ein Wischblatt (5), das an dem Wischarm (11) der Wischarmbaugruppe (4) gesichert ist.

8. Scheibenwischanlage (3) nach Anspruch 7, weiter ein Antriebssystem (6) beinhaltend, das eine Wischwelle (7) und eine Antriebsvorrichtung (8) beinhaltet, die konfiguriert ist, um die Wischwelle (7) drehend wechselseitig in zwei entgegengesetzte Richtungen anzutreiben, um den Wischarm (11) wechselseitig drehend zwischen zwei entgegengesetzten Extrempositionen anzutreiben.

9. Fahrzeug (1), das eine Windschutzscheibe (2) und eine Scheibenwischanlage (3) nach Anspruch 7 oder 8 beinhaltet (2).

## Revendications

1. Ensemble bras d'essuie-glace (4) pour un système d'essuie-glace de pare-brise de véhicule (3), l'ensemble bras d'essuie-glace (4) comportant :
- un bras d'essuie-glace (11) configuré pour supporter un balai d'essuie-glace (5),
- un élément de montage (9) configuré pour être fixé à un arbre d'essuie-glace (7), le bras d'essuie-glace (11) étant relié de manière pivotante à la partie de montage (9),
- un élément de ressort (14) comportant une première partie d'extrémité de ressort (14.1) reliée de manière fonctionnelle au bras d'essuie-glace (11) et une deuxième partie d'extrémité de ressort (14.2) reliée de manière fonctionnelle à l'élément de montage (9), l'élément de ressort (14) étant configuré pour appliquer une force de sollicitation au bras d'essuie-glace (11) de sorte que, en conditions d'utilisation, un balai d'essuie-glace (5) supporté par le bras d'essuie-glace (11) soit poussé contre un pare-brise de véhicule (2),
- un dispositif de réglage de force (15) configuré pour régler la force de sollicitation appliquée par l'élément de ressort (14) au bras d'essuie-glace (11), le dispositif de réglage de force (15) comportant un élément d'actionnement (16) auquel est reliée la première partie d'extrémité de ressort (14.1) de l'élément de ressort (14), l'élément d'actionnement (16) étant monté de manière mobile sur le bras d'essuie-glace (11) entre une première position de réglage et une deuxième position de réglage, et étant configuré pour déplacer la première partie d'extrémité de ressort (14.1) entre une première position de ressort dans laquelle l'élément de ressort (14) applique une première force de sollicitation au bras d'essuie-glace (11) et une deuxième position de ressort dans laquelle l'élément de ressort (14) applique une deuxième force de sollicitation au bras d'essuie-glace (11) qui est supérieure à la première force de sollicitation, lorsque l'élément d'actionnement (16) est déplacé entre les première et deuxième positions de réglage, le dispositif de réglage de force (15) comportant en outre au moins une fente de guidage (21, 22) prévue sur le bras d'essuie-glace (11) et configurée pour guider l'élément d'actionnement (16) pendant des déplacements de l'élément d'actionnement (16) entre les première et deuxième positions de réglage, l'au moins une fente de guidage (21, 22) comportant une première surface de butée (23.1, 24.1) sur laquelle l'élément d'actionnement (16) vient en butée lorsque l'élément d'actionnement (16) se trouve dans la première position de réglage, et une deuxième surface de butée (23.2, 24.2) sur laquelle l'élément d'actionnement (16) vient en butée lorsque l'élément d'actionnement (16) se trouve dans la deuxième position de réglage,
**caractérisé en ce que** l'au moins une fente de guidage (21, 22) comporte une partie de guidage allongée (21.1, 22.1) définissant la première surface de butée (23.1, 24.1), et une partie de retenue (21.2, 22.2) définissant la deuxième surface de butée (23.2, 24.2).

2. Ensemble bras d'essuie-glace (4) selon la revendication 1, **caractérisé en ce que** la deuxième position de ressort est plus éloignée de la partie de montage (9) que la première position de ressort.

3. Ensemble bras d'essuie-glace (4) selon la revendication 1 ou 2, **caractérisé en ce que** le bras d'essuie-glace (11) comporte une partie inférieure (13) configurée pour être orientée vers le pare-brise de véhicule (2), la deuxième position de ressort étant plus proche de la partie inférieure (13) du bras d'essuie-glace (11) que la première position de ressort.

4. Ensemble bras d'essuie-glace (4) selon l'une quelconque des revendications 1 à 3, **caractérisé en ce que** l'élément d'actionnement (16) est monté coulissant sur le bras d'essuie-glace (11).

5. Ensemble bras d'essuie-glace (4) selon l'une quelconque des revendications 1 à 4, **caractérisé en ce que** l'élément d'actionnement (16) comporte une partie d'attache (17) sur laquelle est attachée la première partie d'extrémité de ressort (14.1), la partie d'attache (17) étant engagée dans l'au moins une fente de guidage (21, 22).

6. Ensemble bras d'essuie-glace (4) selon l'une quelconque des revendications 1 à 5, **caractérisé en ce que** l'élément d'actionnement (16) comporte au moins une partie de manipulation (18.1, 18.2) située à l'extérieur du bras d'essuie-glace (11) et configurée pour être manipulée par un utilisateur.

7. Système d'essuie-glace de pare-brise (3) pour un véhicule, comportant :
- un ensemble bras d'essuie-glace (4) selon l'une quelconque des revendications 1 à 6, et
- un balai d'essuie-glace (5) fixée au bras d'essuie-glace (11) de l'ensemble bras d'essuie-glace (4).

8. Système d'essuie-glace de pare-brise (3) selon la revendication 7, comportant en outre un système d'entraînement (6) comportant un arbre d'essuie-glace (7) et un dispositif d'entraînement (8) configuré pour entraîner en rotation l'arbre d'essuie-glace (7) alternativement dans deux directions opposées de manière à entraîner en rotation alternativement le bras d'essuie-glace (11) entre deux positions extrêmes opposées.

9. Véhicule (1) comportant (2) un pare-brise (2) et un système d'essuie-glace de pare-brise (3) selon la revendication 7 ou 8.
